# EUROPEAN PATENT APPLICATION

(11) **EP 3 674 934 A1**
(43) Date of publication of application: **01.07.2020**
(21) Application number: 18306846.9
(22) Date of filing: 26.12.2018
(51) Int. Cl.: G06F 21/32, G06F 21/44, H04L 9/32, G06K 9/00, H04L 29/06

(54) **BIOMETRIC ACQUISITION SYSTEM AND METHOD**

(71) Applicant: Thales Dis France SA, 92190 Meudon (FR)
(72) Inventor: BANCHELIN, Xavier, 92190 MEUDON (FR); GIRAUD, Nicolas, 92190 MEUDON (FR); KRIZENECKY, Milan, 92190 MEUDON (FR)
(74) Representative: Lotaut, Yacine Diaw

(57) **Abstract**

The present invention relates generally a method of acquisition of a biometric template from a biometric device wherein a biometric image information is captured from said biometric device,
- wherein when an anti-spoofing detection method is successful, an extraction of said biometric template from the captured biometric image information is performed and a digital integrity is computed at least over a part of a predefined message, and
- wherein a biometric matching system receiving said biometric template and said digital integrity set up an authentication mechanism of the biometric device through the received digital integrity and that said biometric template is processed by said biometric matching system only when the output of the authentication mechanism is successful.

## Description

### TECHNICAL FIELD

The present invention relates generally to a biometric acquisition system and method of biometric data for enrolment, identification of individuals and, more particularly, to the authentication of individuals.

### BACKGROUND ART

Biometric enrolment, identification and matching systems are widely used to distinguish between individuals that are authorized to engage in an activity and individuals that are not authorized to engage in that activity. For example, systems to compare facial features, iris imagery, fingerprints, finger vein images, palm vein images, face recognition mechanism are commonly used to determine whether biometric data provided by an individual matches information in a database, and if a match is determined, then the individual may be allowed to engage in an activity. For example, the individual may be allowed to enter a building or room, or allowed to use an electronic device such as a mobile phone or an application running on a mobile device.

Unfortunately, existing biometric system can be easily deceived (a.k.a "spoofed") by the use of imposter body parts or other fraudulent mechanisms. For example, a spoofing attack of a face recognition mechanism is an attempt to acquire someone else's privileges or access rights by using a photo, video or a different substitute for an authorized person's face. Some examples of such attacks can be:
- Print attack: The attacker uses someone's photo. The image is printed or displayed on a digital device.
- Replay/video attack: A more sophisticated way to trick the system, which usually requires a looped video of a victim's face. This approach ensures behavior and facial movements to look more 'natural' compared to holding someone's photo.
- 3D mask attack: During this type of attack, a mask is used as the tool of choice for spoofing. It is an even more sophisticated attack than playing a face video. In addition to natural facial movements, it enables ways to deceive some extra layers of protection such as depth sensors.

One known method of guarding against spoofing involves determining whether the biometric object exhibits characteristics associated with liveness.

As many methods of deceiving an identification system and/or verification system use spoofs that are not alive, detecting whether a biometric object is part of a live being would be useful in detecting the presence of a spoof. As more and more biometrics are used for individual identification and/or verification, liveness detection becomes increasingly important in order to ensure access security and accuracy. In such a system, if a determination is made that a biometric object is not part of a live individual, then the individual presenting the biometric object may be denied access (for example, access to a requested activity) even if the biometric information (such as a fingerprint) matches information in an associated identification/verification database.

However, although advantageous in some respects, it is unlikely that the particular type of spoofing to be used will be known in advance. Indeed, the main difficulty is to determine discriminant cues for all types of attacks and acquisition conditions. However, as spoofing techniques keep evolving, countermeasures that are more complex need to be developed to remain one-step ahead.

One known way to overcome the drawbacks raised above is the presence of a trusted officer during all the steps of enrolment to verification/identification of a biometric system. The presence of trusted officer is particularly suitable, when the identity chain of trust is expected to be very high, for example for a signature of notarized document, an authentication of a border, e-Voting...

The enrolment phase and the identification/verification phase are undertaken by a trusted officer using a trusted infrastructure to assure individuals that the data cannot be compromised and information is not cloned.

However, the presence of trusted officer is not suitable for network-based biometric enrolment and identification/verification conducted with an individual at a remote location and sight-unseen. The identity chain of trust requiring the presence of a trusted officer is not applicable for such network-based biometric conducted at a remote location.

There is an increasing need to identify and verify the authenticity of an individual to authorize the said individual to engage in an activity through an identity chain of trust.

### SUMMARY OF THE INVENTION

The following summary of the invention is provided in order to provide a basic understanding of some aspects and features of the invention. This summary is not an extensive overview of the invention and as such, it is not intended to particularly identify key or critical elements of the invention or to delineate the scope of the invention. Its sole purpose is to present some concepts of the invention in a simplified form as a prelude to the more detailed description that is presented below.

In view of the shortcomings of the prior art, it is an object of the present invention to increase the security, anti-counterfeiting capabilities and trust of a biometry system from enrolment to the identification/verification process wherein a duty officer is not required.

The present invention relates to biometric acquisition systems, and more particularly, to the process and methods for providing high-integrity into biometric enrolments and identification/verification process.

As used herein, high-integrity means providing a level of assurance that a prospective individual's claimed identity is a living individual and that the prospective individual biometrics is captured from a trusted biometric device.

The present invention proposes to use the potential and intended benefits of the biometric acquisition system and method as an enhanced access security technology for the:
- control point where electronic biometric identity is created: The point at which or process by which a captured biometric data is initially associated with an individual before it is added to a biometric matching system. This point is generally called the point of enrolment. The present invention allows to minimize the ability to corrupt a biometric matching system through fraudulent enrolment.
- control point where electronic biometric identity is verified. The point at which or process by which a captured biometric data is compared to a recorded biometric data for authentication. This point is generally called the point of verification. This point allows ensuring that said captured biometric data belongs to the individual for which said biometric data matches the individual's biometric data recorded within the biometric matching system.

While the enrolment process offers usually a high level of control, the verification process can be particularly sensitive, typically for online usage. The present invention proposes a solution of an identity chain of trust of the verification point wherein a trusted officer is no more required while it is assured that data cannot be compromised and information is not cloned.

The system and method are designed with the intention of working in support of any biometric authentication technology, which may be selected for implementation by an entity intending to utilize a biometric authentication technology.

The proposed invention is designed for devices or solutions where the biometric acquisition system enforces specific rules for performing anti-spoofing method as such liveness detection, digital integrity mechanism and authentication mechanism. When a biometric data is acquired and its anti-spoofing detection validated, the authentication of the capture device is performed through a digital integrity computed from at least a part of an extracted template. The digital integrity can be a digital signature or other means such as stamp or watermark. Upon presentation of the extracted template to the biometric matching system (for example a database or a Secure Element featured with match-on-card application), the biometric matching system will start first to authenticate the capturing device before proceeding to the processing of the extracted template. The authentication of the capturing device provides assurance that the biometric acquisition process has been performed by a trusted capture device.

According to an embodiment of the present invention, the capture device is authenticated by the biometric matching system from the received digital integrity.

According to an embodiment of the present invention, the digital integrity is a digital signature. In this case, a digital certificate is associated to the biometric device leading for authenticating said biometric device during the biometric acquisition process. This certificate can be certified through a multi-level certificate chain. The use of digital certificates provides greater integrity and a degree of authentication of biometric devices, which instills a greater level of confidence in the acquired biometric data for enrolment process and verification process.

According to an embodiment of the present invention, the digital integrity is a digital watermarking. A digital watermark algorithm can for example embed information into the digital signature as a watermark, enhancing the signature information hidden.

According to an embodiment, the digital integrity is a digital fingerprinting. Digital fingerprinting can be based on the use of a mathematical function to produce a numerical value where the function takes an arbitrary length of data as its input and outputs a numerical value of a specified length; 128 bits (16 bytes), 256 bits (32 bytes) and 512 bits (64 bytes) are typical lengths.

During the biometric acquisition process, an image is captured from the biometric capture device. An anti-spoofing detection method is applied to the individual to determine whether a real biometric trait is presented to the biometric capture device or a synthetically produced artefact containing a biometric trait.

Anti-spoofing detection method can be any technique that is able to automatically distinguish between real biometric traits presented to the biometric capture device and synthetically produced artefacts containing a biometric trait. Anti-spoofing approaches are also referred to in the prior art by the terms liveness detection or vitality detection techniques. Both terms (i.e., anti-spoofing and liveness detection) are not fully equivalent, as not all anti-spoofing methods are necessarily based on cues directly related to living features of biometric traits. However, in practice, they are used as synonyms in the majority of cases. Therefore, in the present specification it will not be made any difference between them.

The anti-spoofing detection method allows determining whether he is a live individual to assure individual presence. The anti-spoofing detection allows detecting whether a live individual is actually present, for example in unsupervised biometric authentication technology such as network-based biometric or critical identity chain of trust.

When, the anti-spoofing detection method is successful, a biometric template data is extracted from the captured image.

The present invention proposes to compute a digital integrity to trust the path from the biometric device and a predefined message. In an embodiment, the predefined message can be at least a part of the extracted biometric template data and can comprise metadata such as a time stamp, quality of the acquisition, information related to anti-spoofing detection verifications performed or any other information that needs to be trusted. The digital integrity is computed from at least a part of the predefined message.

The digital integrity may be signed and/or encrypted by using an encryption key of the biometric capture device or any means that bind the biometric capture device and the biometric matching system.

The digital integrity is then appended to the extracted biometric template, for transmission to the biometric matching system.

The biometric matching system verifies the integrity of the message according to the received digital integrity. If the digital integrity is a digital signature, the biometric matching system can verify the chain of the digital certificate of the digital integrity to ensure that the received digital certificate chain is well-formed, valid, and trustworthy. If other means are used such as digital watermarks, the biometric matching system can verify the binding between the biometric device and the generated digital integrity. The biometric matching system verifies that the received digital integrity is well-formed, valid, correctly signed, and trustworthy. When the verification is successful, the biometric capture device is considered as a trustable one and the biometric matching system can then either record the received extracted biometric template data when the process is at the enrolment phase or compare the received extracted biometric template data to a recorded one when the process is at the verification phase.

Prior or during the enrolment process, the biometric matching system is "seeded" to initiate the chain of trust with one or several biometric devices. This can consists in provisioning the root certificate or any seed that will be used later on for the digital integrity verification.

The solution proposed by the present invention can be suitable for implementation where the chain of trust of the acquisition and the template extraction may be expected to be high such as signature of notarized document, authentication border, e-Voting....

The end-to-end secure acquisition of biometric data system proposed by the present invention allows binding an individual's biometric template data to preliminary verifications of anti-spoofing detection and trust of the biometric capture device.

The end-to-end security mechanism proposed by the present invention provides an improvement over conventional methods of enrolment and verification process because the acquisition process for biometric identity data being built using this system is more difficult to circumvent by individuals intent upon fraud. The acquisition of biometric identity data method of this current invention provides an additional improvement over conventional methods of acquisition because of the varied levels of trust that may be associated to individual identities.

The present invention proposes a solution of an identity chain of trust from an enrolment process to an identification/verification process for any biometric authentication technology.

To achieve those and other advantages, and in accordance with the purpose of the invention as embodied and broadly described, the invention proposes a method of acquisition of a biometric template from a biometric device wherein a biometric image information is captured from said biometric device,
- wherein when an anti-spoofing detection method is successful, an extraction of said biometric template from the captured biometric image information is performed and a digital integrity is computed at least over a part of a predefined message, and
- wherein a biometric matching system receiving said biometric template and said digital integrity set up an authentication mechanism of the biometric device through the received digital integrity and that said biometric template is processed by said biometric matching system only when the output of the authentication mechanism is successful.

According to an embodiment of the present invention, the authentication mechanism of the biometric device comprises the following steps:
- computing by the biometric device a cryptographic data computed at least over a part of the predefined message, the digital integrity comprising said cryptographic data,
- sending from the biometric device to the biometric matching system, the digital integrity comprising the computed cryptographic data,
- upon reception, the biometric matching system set up an authentication phase of the biometric device wherein the validity of the cryptographic data is checked, when the authentication phase is successful, the received biometric template is either recorded or compared to a previously recorded one by the matching system.

According to an embodiment of the present invention, the predefined message is at least a part of the extracted biometric template data.

According to an embodiment of the present invention, the predefined message comprises metadata such as a time stamp, quality of the acquisition, anti-spoofing detection information.

According to an embodiment of the present invention, the cryptographic data is a digital signature, a digital watermarking or is computed by applying a one way function to the predefined message.

According to an embodiment of the present invention, a cryptographic key is associated to the biometric device and wherein the cryptographic data is computed from the predefined message and said cryptographic key, and wherein during the authentication phase of the biometric device the validity of the cryptographic key is checked.

According to an embodiment of the present invention, the cryptographic key is a digital certificate and that the information to verify the validity of the cryptographic key corresponds to a certificate chain of the digital certificate.

According to an embodiment of the present invention, the cryptographic key is a session key derived from a master key and that the information to verify the validity of the cryptographic key corresponds to the data provided by the biometric device allowing the matching system to derive a session key from a same master key previously stored.

According to an embodiment of the present invention, wherein the captured biometric image information is analyzed to detect anti-spoofing on a basis of a decision making model, a machine learning algorithms, an adaptive anti-spoofing detection model, an anti-replay video method or a detection of difference between 2D/3D motion.

According to an embodiment of the present invention, an anti-replay token is generated by the biometric device and associated to the cryptographic data; the processing of the received biometric template is set up by the matching system when the verification of the validity of the anti-replay token is successful.

According to an embodiment of the present invention, a mutual authentication mechanism is established between the biometric device and the matching system

The present invention also relates to a data carrier such as an identification card, credit card, passport, or a name badge wherein the biometric chain of trust method proposed herein is implemented.

Other aspects and advantages of the invention will become apparent from the following detailed description, taken in conjunction with the accompanying drawings, illustrating by way of example the principles of the invention.

### BRIEF DESCRIPTION OF THE DRAWINGS

The following detailed description will be better understood with the drawings, in which:
FIG. 1 schematically illustrates the different entities involved in a biometric acquisition process.
FIG. 2 schematically illustrates embodiments of a biometric device according to an exemplary embodiment of the present invention.
FIG. 3 illustrates an overview logic flow diagram in accordance with an exemplary embodiment of this invention during an acquisition of a biometric data.
FIG. 4 illustrates an overview logic flow diagram in accordance with an exemplary embodiment of this invention during an anti-spoofing detection.

### DETAILED DESCRIPTION OF THE EMBODIMENTS OF THE INVENTION

It is to be understood that various other embodiments and variations of the invention may be produced without departing from the spirit or scope of the invention. The following is provided to assist in understanding the practical implementation of particular embodiments of the invention.

The same elements have been designated with the same referenced numerals in the different drawings. For clarity, only those elements, which are useful to the understanding of the present invention, have been shown in the drawings and will be described.

Further, the mechanisms of data communication between the parties and their environment have not been detailed either, the present invention being here again compatible with usual mechanisms.

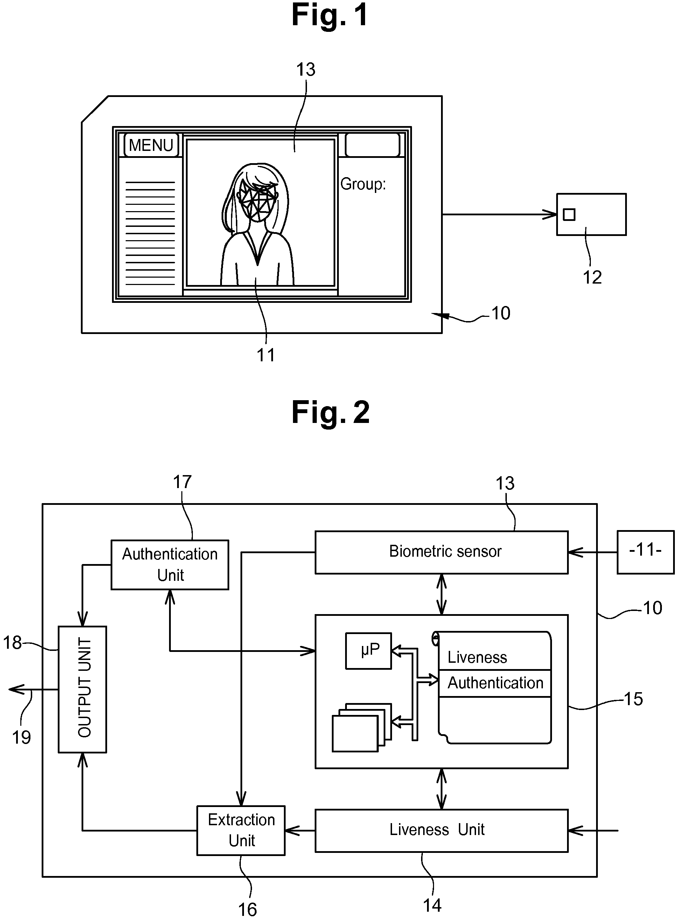

Furthermore, the connecting lines shown in the various figures contained herein are intended to represent exemplary functional relationships and/or physical couplings between the various elements. It should be noted that many alternatives, additional functional relationships, or physical connections might be present in a practical system. Furthermore, the various entities in FIG. 1 may communicate via any suitable communication medium (including the Internet), using any suitable communication protocol.

Moreover, when an action is said to be performed by a device, it is in fact executed by a microprocessor in this device controlled by instruction codes recorded in a program memory on said device. An action is also ascribed to an application or software. This means that part of the instruction codes making up the application or software are executed by the microprocessor.

Reference throughout the specification to "an embodiment" or "another embodiment" means that a particular feature, structure, or characteristic described in connection with an embodiment is included in at least one embodiment of the subject matter disclosed. Thus, the appearance of the phrases "in an embodiment" or "in another embodiment" in various places throughout the specification is not necessarily referring to the same embodiment. Further, the particular features, structures or characteristics may be combined in any suitable manner in one or more embodiments.

The application may be embodied as methods and systems for acquiring a trustfully biometric identity data.

FIG. 1 depicts the basic configuration of a biometric acquisition system, which is common to the several biometric authentication technology. Before explaining the present embodiments in detail, it is to be understood that the embodiments are not limited to the particular descriptions and that it can be practiced or carried out in various ways including the use of multiple methods of biometric technology on any biometric digital image capture device acquiring biometric data.

FIG. 1 shows entities involved in a flow diagram for securing a biometric acquisition system. For simplicity of discussion, only one of each entity is shown at FIG.1. FIG. 1 depicts an example of the system in which a biometric device 10 and a biometric matching system 12 are implemented.

The biometric device 10 as illustrated in Fig 2 typically comprises a processor, a memory, input devices, output devices, and suitable communications scheme, all of which are operatively coupled to the processor.

The biometric device 10 has the function of outputting biometric data, herein a biometric template extraction 19 from a user's face 11, requested by the matching system 12 in a biometric matching system for enrolment or verification.

The term "biometric template" throughout the specification can be any data representative of a biometric, a digital or other image of a biometric (e.g., a bitmap or other file), extracted digital or other information relating to the biometric (e.g., a template based on minutiae detail), etc. The data may refer to print boundaries, contrast, or ridge patterns, for example.

The term "minutiae" includes unique and measurable physical characteristics of a print. For fingerprints, minutiae include the starting and ending point of ridges and ridge junctions among features.

Any device capable of outputting biometric template 19 can be used as the biometric device 10; for example, a facial recognition reader, a fingerprint recognition reader, an iris recognition reader, a palm vein recognition reader, a voice recognition reader...

The biometric device 10 can be also any type of device comprising capabilities of outputting biometric data such as mobile phone, laptops, computers, gaming devices, etc.. However, for the sake of clarity and simplicity, the embodiments outlined in this specification are exemplified with and related to a facial recognition reader.

The biometric matching system 12 comprises a biometric data storing unit (not shown) in which a plurality of biometric template 19 can be stored in advance. The biometric template 19 stored in the biometric data storing unit may be used for biometric authentication. As the biometric matching system 12 can store a plurality of kinds of biometric template 19 in advance, it can be used with any kind of biometric matching system. The biometric matching system 12 may be a server or a trusted third party server or a secure element wherein is featured a match-on-card application. For the sake of clarity and simplicity, the embodiments outlined in this specification are exemplified with and related to an identity document comprising a secure element 12 featured with match-on-card application.

As illustrated in FIG. 2, the biometric device 10 may comprise an acquisition unit or a sensor 13 for acquiring biometric image data, an anti-spoofing determination unit 14, a processor unit 15, a biometric extraction unit 16 for extracting a template from the biometric image data collected by the acquisition unit 13, an authentication unit 17 for performing computation of cryptographic data such a digital integrity and an output unit 18 for transmitting the extracted template 19.

In the embodiment herein illustrated, the biometric acquisition unit 13 is a facial sensor, and that the biometric template 19 requested by the biometric authentication technology for enrolment or verification is from the user's face 11. Such kind of biometric acquisition unit 13 is well known in the art.

The biometric acquisition unit 13 can comprise one or more biometric sensors or other biometric devices associated with the biometric device 10.

This, however, is an example given only for illustrative purposes, and it will be appreciated that the biometric template 19 used for individual authentication is not limited to the data from the user's face 11user's face 11but any other kind of biometric image data may be used, and also that the biometric acquisition unit 13 installed in the biometric device 10 is not limited to the facial sensor.

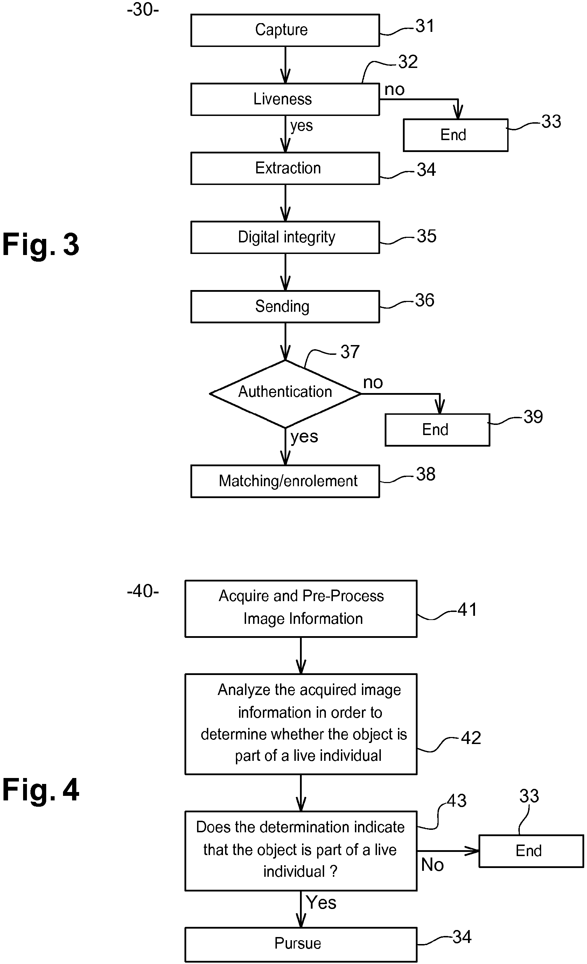

FIG.3 illustrates a flow diagram 30 depicting an exemplary embodiment of the acquisition process of the biometric template 19. In the embodiment illustrated in FIG. 3, at step 31, the biometric acquisition unit 13 of the biometric device 10 captures the user's face 11 relating to the person seeking to register or to be identified. The captured biometric image information is analyzed for anti-spoofing detection at step 32.

The biometric image information may be a visual representation of the user's face 11 and/or a data representation of the user's face 11. Although not visually recognizable as an image of the user's face 11, the data representation may nonetheless contain identifying data corresponding to the user's face 11. In an implementation, a single or several information image of the user's face 11 is obtained.

The biometric image information used to determine anti-spoofing may be the same information used to generate the biometric template 19. For example, the biometric image information may be information about the user's face 11 that was captured at step 31.

The captured biometric image information is analyzed at step 32 in order to determine whether the user's face 11 is part of a live individual. Figure 4 illustrates a flow diagram 40 depicting an embodiment of determination of anti-spoofing set up at step 32 of FIG. 3.

Analysis of the biometric image information, in the embodiment herein illustrated, is carried out by the processor of the biometric device 10. In another embodiment, one or more multipurpose computers or processors that have been programmed to analyze the image information, such as one or more applications processors of a mobile device, a computer, may carry out the analysis....

As illustrated in FIG.4, the acquired biometric image information may be preprocessed at step 41 as needed, for example, to reduce noise, increase contrast, remove artifacts, or compensate for temperature effects.

Various systems and methods may be used to evaluate the anti-spoofing at step 42 of the user's face 11. The anti-spoofing detection step may be used to provide an anti-spoofing detection output score or make a determination of liveness.

In an embodiment of implementation, the anti-spoofing detection can be based on a mechanism based on analysis of how 'alive' a test face is. This can be done by checking eye movement, such as blinking and/or face motion.

In another embodiment, the anti-spoofing detection can be based on contextual information techniques. By investigating the surroundings of the biometric image information, the biometric device can detect if there was a digital device or photo paper in the scanned area.

In another embodiment, the anti-spoofing detection can be based on texture analysis. In this case, small texture parts of the input biometric image information can be probed in order to find patterns in spoofed and real images.

In another embodiment, the anti-spoofing detection can be based on user interaction, by asking the user to perform an action (turning head left/right, smiling, blinking eyes) the machine can detect if the action has been performed in a natural way which resembles human interaction.

According to another embodiment, a method of determining anti-spoofing at step 42 may include one or more machine learning algorithms to interpret data derived from the methods of determining anti-spoofing described above, including algorithms such as support vector machine (SVM), Random forest, or extreme learning machine (ELM). According to this method, the machine-learning algorithm can be trained based upon the real and fake biometric image information. The output of the training may be used to create a classification model, or to improve an existing classification model, against which future sample blocks would be compared. The classification model may be used in a comparison to determine whether an image is from a real or a fake biometric object.

According to another embodiment, a method of determining anti-spoofing may include an adaptive anti-spoofing detection model. The method can include obtaining a new image from an enrolled individual after the individual enrolls onto a device. The new image can be used to update or tune a previously trained classification model. For example, the update or tune may be used to better tune the trained classification model to a specific individual, or more generally to improve a classification model or group of classification models to distinguish a real user's face from a fake user's face. An adaptive anti-spoofing detection model can advantageously updating the model as a biometric object (e.g. user's face) changes with time (e.g. due to frequent use, which leads to wearing out, or natural aging of the person). By updating the classification model according to a change in the biometric data, the accuracy of the system can be maintained- or possibly improved over time.

According to another embodiment, a method of determining anti-spoofing may include one or more machine algorithms able to detect the differences between a 3D face moves differently from a 2D picture. This method comprises the steps of capturing multiple face images and checking for changes and natural motion. Indeed, a 3D face moves differently from a 2D photo, and the algorithms can detect this difference.

According to another embodiment, a method of determining anti-spoofing may include one or more machine algorithms able to detect video replays and other copies like an avatar with a special texture-based algorithm that knows when a recaptured version of a person is presented instead of a real person.

According to another embodiment, a method of determining anti-spoofing may add some specific device to the biometric capture device in order to detect particular properties of a living trait e.g., facial thermogram, blood pressure, fingerprint sweat, or specific reflection properties of the eye.

The method of determining anti-spoofing may be enhanced by guiding the individual to turn their head a certain way and verifying that the head was turned in the specified direction or by requiring the individual to speak multiple words or digits presented in a random order.

According to another embodiment, a method of determining anti-spoofing may be a multibiometric anti-spoofing which is based on the combination of different anti-spoofing methods increasing the robustness to direct attacks, as, in theory, generating several fake traits is presumed to be more difficult than an individual trait.

Although the present disclosure has been described with respect to one or more particular embodiments, it will be understood that other embodiments of anti-spoofing determination method may be used at step 42 without departing from the spirit and scope of the present disclosure.

If the anti-spoofing analysis at step 43 of the biometric image information indicates that the user's face 11 is not part of a live individual, then the acquisition process 10 of the biometric data 11 may be end up at step 33. However, if analysis of the image information indicates that the user's face 11 is part of a live individual, then the acquisition process 30 for matching/enrolment point is pursued at step 34.

When the anti-spoofing detection is successful, step 34 is step up. At step 34, extracted features of the user's face 11 may be processed to generate the biometric template 19 (e.g. template information, template data, biometric reference data, or reference). For example, the biometric template 19 may include the type, size, location and/or orientation of face patterns and/or face minutiae.

At step 35, the biometric device 10 computes a digital integrity. Said digital integrity comprises cryptographic data allowing authenticating said biometric device. Indeed, according to the invention, the cryptographic data of the biometric device 10 may be used as a condition precedent for the matching/enrolment process in the side of the biometric matching system 12. The cryptographic data is computed from a predefined message. The predefined message can be any data. In an embodiment, the predefined message is at least a part over the extracted biometric template 19. The predefined message can comprise metadata such as a time stamp, quality of the acquisition, anti-spoofing detection verifications output or any other information that needs to be trusted.

In an embodiment, any algorithms which prevent the retrieval of the initial information can compute the cryptographic data. This kind of algorithms is preferably a one-way function.

In one embodiment, the cryptographic data is computed by applying hashing functions or hashing algorithms (Example of hashing algorithms may include without limitation variations of Secure Hash Algorithm (SHA), Message Digest Algorithm (MDA), and Race Integrity Primitives Evaluation Message Digest (RIPEMD)...) to the identification data and/or the predefined message. A hashing algorithm can transform any kind of data into a fixed length identifier string (often called a digest).

In another embodiment, the cryptographic data can be computed by applying a MAC (Message Authentication Code) operation, an HMAC (Hash MAC) operation or a sign operation on the predefined message.

In another embodiment, the cryptographic data can be computed from watermarking algorithm.

Those various exemplary embodiments are well known by the person skilled in the art and do not need to be described anymore.

In an embodiment, the cryptographic data can be a digital signature. In this case, the biometric device 10 stores a digital certificate certifying the authenticity of the biometric device and any signals originating therefrom. The digital certificate is generated and associated to the biometric device by a trusted certificate authority. The digital certificate comprises the public and private key. The private key may be stored in a secure storage component of the biometric device 10.

Device identification data may be associated with the biometric device 10 during its manufacturing phase. Device identification data generally comprises information identifying or associated with the hardware of the biometric device. Device identification data may include, for example, serial numbers, model numbers, manufacturer information etc. The device identification data may be stored in a storage component of the biometric device 10.

"Trusted certificate authority" should generally be construed to include any entity, organization, corporation, person, business, system, or device that is authorized or trusted to create digital certificates for certifying the authenticity of a biometric device 10. The term "trusted certificate authority" may also refer to any sub-licensee or agent of the trusted certificate authority that is authorized by the trusted certificate authority to generate and assign digital certificates to hardware devices. By way of example, and not limitation, the trusted certificate authority may include a manufacturer of the biometric device 10.

The digital signature can be computed from the predefined message, the device identification data and the digital certificate. The electronic signature allows to authenticate the identity of the biometric device and to ensure that the original content of the data is unchanged from the time of signing. In an embodiment, the biometric device can then use the private key of the digital certificate to encrypt the electronic signature.

The digital integrity comprises also a certificate chain of the biometric device 10. The certificate chain data may be a list of all Certification Authorities (CA) in a shortest trusted path starting with a subscriber's own CA and ending with the target CA that issued the certificate of the biometric device that sent a digitally signed message.

Said digital integrity and the biometric template can be transmitted, at step 36, to the biometric matching system 12.

At step 37, upon receiving the digital integrity from the biometric device, the biometric matching system 12 set up the process of authenticating said biometric device. The authentication process can generally be construed as acts for determining whether the received digital integrity is well-formed, valid, correctly signed, and trustworthy.

When the cryptography data is a digital signature, the biometric matching system can verify the chain of the digital certificate of the digital integrity to ensure that the received digital certificate chain is well-formed, valid, and trustworthy. If other means are used such as digital watermarks, the biometric matching system can verify the binding between the biometric device and the generated digital integrity.

When the digital integrity is valid, at step 38, the biometric matching system 12 set up the completion of the enrolment/matching process.

But when digital integrity is not valid, at step 39, the biometric matching system 12 does not authorize to operate. The term "operate" is broadly defined herein to include the enabling of the matching system 12 to perform a matching process or an enrolment process.

In an embodiment, during enrolment, the acquired biometric template may be stored in a local or external system.

The verification/authentication process of the biometric template may include facial matching using information stored in the system and match determination to determine and provide a match output signal. In the identification/verification/authentication stage, each acquired biometric template may be used for matching. The verification/authentication may provide a match output signal indicating whether a match has occurred. The present invention allows offering a mean for making sure that the candidate template provided for a biometric comparison is one, which has been acquired with trusted device corresponding to an expected device.

The invention brings an argument in favor of non-repudiation by ensuring that the candidate template is produced by 'certified/authenticated' equipment.

In an embodiment, the authentication mechanism can be enhanced by including a challenge in the digital integrity. This challenge protects against replay attacks and ensures that the candidate template submitted for enrolment/matching is extracted/generated in this particular acquisition session.

A token with an expiry time can be added to the digital integrity to avoid replay attacks.

Mutual authentication between the biometric device 10 and the biometric matching system 12 can be implemented.

The invention should not be limited by the above-described embodiments, methods and examples.

In an embodiment, the authentication process could be based on a symmetric scheme, e.g. by deriving the symmetric signature key from a static secret key. During a personalization process of the biometric device, a master key can be generated and loaded into a secure component of said biometric device 10. The master key can be generated by a key management system. The key management system is a software program executing in a computer. The logical functions of the key management system software may be distributed among computers in a client/server network or centralized into a single processor. In an embodiment, the biometric device 10 comprises the key management system. The key management system can be executed by a manufacturer server of the biometric device or by any trusted system.

The key management system shares the generated master key and associated identification of the biometric device data with the biometric matching system 12. Upon received, the matching system 12 stores into its database the master key with the identification data associated with the biometric device.

Therefore, the key management system creates a static key for the biometric device that must in turn be used to create session keys for authenticating said biometric device.

Any suitable form of generation and share of the master key and the identification data between the biometric device 10 and the matching system 12 may be implemented as one of ordinary skill would recognize. The way of how the shared master key and the identification data are generated and shared between the entities is outside the scope of the present invention.

When the anti-spoofing determination is successful, the biometric device 10 derives a session key from a derivation algorithm, the master key and the identification data. The derivation algorithm used herein is well known by the person in the art and do not need to be described any more.

The biometric device 10 at step 35 computes the cryptographic data of the digital integrity. In an embodiment, the cryptographic data is a result of a MAC (Message Authentication Code) operation on at least one part over the predefined message. The MAC operation uses the session key and a cryptographic checksum algorithm to produce the MAC signature value, which later can be used to ensure the data has not been modified.

Upon reception, the matching system 12 derives the session key from the master key stored into its database, the identification data and the derivation algorithm. The matching system 12 computes a MAC value from the received predefined message and the computed session key. The computed MAC value is compared to the received MAC value to check if the biometric device is a trustable one. In an embodiment, if the verification of the MAC value fails, the process flow can be closed at step 39, the matching system 12 may notify the biometric device 10 that the MAC value is tampered. If on the other hand the MAC value is successfully verified, the matching system 12 can be authorized to operate, at step 38.

In an embodiment, biometric device 10 or the matching system 12 can define a diversifying data that can be used to compute the session key. For that, the biometric device 10 can generate a random value or a challenge. The generated random value can provide the guarantee to the matching system 12 that the current session key has not been pre-computed and the legitimate biometric device 10 is indeed at the other end of the channel. The size of this random value does not need to be very large, few bits could be sufficient. The session key is derived from the master key, the identification data, the diversifying data and the derivation algorithm.

In an embodiment, the authentication of the biometric device 10 is performed by a verification system third party. This verification system third party is an entity different/external from the biometric matching system. In this embodiment, the verification system receives from the biometric device the digital integrity. The verification system checks, as described in step 37, the validity of the digital integrity. If the checking is successful, the biometric template is sent to the biometric matching system for enrolment/verification.

## Claims

1. Method of acquisition of a biometric template from a biometric device wherein a biometric image information is captured from said biometric device,
- wherein when an anti-spoofing detection method is successful, an extraction of said biometric template from the captured biometric image information is performed and a digital integrity is computed at least over a part of a predefined message, and
- wherein a biometric matching system receiving said biometric template and said digital integrity set up an authentication mechanism of the biometric device through the received digital integrity and that said biometric template is processed by said biometric matching system only when the output of the authentication mechanism is successful.

2. Method of acquisition of a biometric template according to the previous claim, wherein the authentication mechanism of the biometric device comprises the following steps:
- computing by the biometric device cryptographic data computed at least over a part of the predefined message, the digital integrity comprising said cryptographic data,
- sending from the biometric device to the biometric matching system, the digital integrity comprising the computed cryptographic data,
- upon reception, the biometric matching system set up an authentication phase of the biometric device wherein the validity of the cryptographic data is checked, when the authentication phase is successful, the received biometric template is either recorded or compared to a previously recorded one by the matching system.

3. Method of acquisition of a biometric template according to any of the previous claims, wherein the predefined message is at least a part of the extracted biometric template data.

4. Method of acquisition of a biometric template according to the previous claim, wherein the predefined message comprises metadata such as a time stamp, quality of the acquisition, anti-spoofing detection information.

5. Method of acquisition of a biometric template according to any of the previous claims 2 to 4, wherein the cryptographic data is a digital signature, a digital watermarking or is computed by applying a one-way function to the predefined message.

6. Method of acquisition of a biometric template according to any of the previous claims 2 to 5, wherein a cryptographic key is associated to the biometric device and wherein the cryptographic data is computed from the predefined message and said cryptographic key, and wherein during the authentication phase of the biometric device the validity of the cryptographic key is checked.

7. Method of acquisition of a biometric template according to the previous claim, wherein the cryptographic key is a digital certificate and that the information to verify the validity of the cryptographic key corresponds to a certificate chain of the digital certificate.

8. Method of acquisition of a biometric template according to the previous claim, wherein the cryptographic key is a session key derived from a master key and that the information to verify the validity of the cryptographic key corresponds to the data provided by the biometric device allowing the matching system to derive a session key from a same master key previously stored.

9. Method of acquisition of a biometric template according to any previous claims, wherein the captured biometric image information is analyzed to detect anti-spoofing on a basis of a decision making model, a machine learning algorithms, an adaptive anti-spoofing detection model, an anti-replay video method or a detection of difference between 2D/3D motion.

10. Method of acquisition of a biometric template according to any previous claims, wherein an anti-replay token is generated by the biometric device and associated to the cryptographic data, the processing of the received biometric template is set up by the matching system when the verification of the validity of the anti-replay token is successful.

11. Method of acquisition of a biometric template according to the previous claim, wherein a mutual authentication mechanism is established between the biometric device and the matching system

12. The Data Carrier according to the previous claim, wherein the carrier is an identification card, credit card, passport, or a name badge.
